# EUROPEAN PATENT APPLICATION

(11) **EP 2 009 421 A1**
(43) Date of publication of application: **31.12.2008**
(21) Application number: 07111430.0
(22) Date of filing: 29.06.2007
(51) Int. Cl.: G01N 1/06, G01N 1/28, G02B 21/32

(54) **Method for separating a lamella for TEM inspection from a core sample**

(71) Applicant: FEI COMPANY, Hillsboro, Oregon 97124-5793 (US)
(72) Inventor: Hayles, Michael, 5627 HA, EINDHOVEN (NL); Luecken, Uwe, 5627 DG, EINDHOVEN (NL)
(74) Representative: Bakker, Hendrik

(57) **Abstract**

The invention relates to a method for slicing lamellae (5) from a core sample (1) and placing the lamellae on a TEM grid (6) for inspection in a TEM (Transmission Electron Microscope). Such a core sample may be a vitreous core sample formed by high-pressure freezing of biological material. Conventionally such lamellae are formed by slicing the lamellae from the core sample with a cryo-ultra-microtome. Due to the mechanical forces exerted on the vitreous material during the slicing artefacts occur, such as knife-marks, chatters, crevasses and deformation. By slicing the lamellae from the core sample by milling with a focused ion beam (4) no mechanical forces are exerted to the vitreous material, thereby eliminating these artefacts.

## Description

### Technical field of the invention

The invention relates to a method for separating a lamella for TEM inspection from sample material comprising structures to be analysed or inspected, the method comprising: providing the sample material, forming a non-liquid, elongated core sample from the sample material, said core sample extending along a longitudinal direction, and slicing a lamella from the core sample, said lamella representing a cross-section of the core sample.
The invention further relates to an apparatus equipped to perform the method according to the invention.

### Background of the invention

Such a method is known from "Cryo-transmission Electron Microscopy of frozen-hydrated sections of Escherichia coli and Pseudonomas aeruginosa", V.R.F. Matias et al., Journal of Bacteriology, October 2003, pages 6112-6118, more specifically page 6113, section "materials and methods".

In the known method hydrated biological material comprising e.g. microbes is frozen inside a thin copper tube by high-pressure freezing. A vitrified core sample is thus formed inside the copper tube. Keeping the temperature of the core sample below 138K (-135°C) to avoid phase changes of the vitreous water, the core sample in the copper tube is then trimmed to a pyramid with a block face of approximately 150·150 µm².
The core sample is then transported to the cryo-chamber of a cryoultramicrotome and sectioned in slices with a nominal thickness of e.g. 50 nm, said slices representing a cross-section of the core sample.
In this context a cross-section is to be understood as a slice formed such that the angle between the surface of the slice and the longitudinal direction of the elongated core sample is between 45 degrees and 135 degrees.
Such a slice, also known as a lamella, may comprise a section of a structure, such as a microbe, to be studied in a TEM. A ribbon of these lamellae is placed on a TEM grid after which the TEM grid may be placed in a TEM for analysis or inspection of the lamellae. The ribbon may comprise a contiguous series of sections of the structures to be studied.

A disadvantage of the known method is the occurrence of artefacts in the lamella thus formed due to mechanical deformation. As vitreous materials are by definition high-viscosity fluids, the sectioning of vitrified samples may easily cause artefacts to occur, including knife-marks, chatters, crevasses and deformation due to compression. These artefacts are caused by the mechanical forces exerted on the vitreous material during sectioning. A study on the cause for these artefacts and a way of reducing them is described in "An oscillating cryo-knife reduces cutting-induced deformation of vitreous ultrathin sections", A. Al-Amoudi et al., Journal of Microscopy, volume 212 (1), (October 2003), pages 26-33. Typically a compression of around 40% may occur, and by using the oscillating knife technique proposed in this article this may be reduced to 10% (page 32, left column, section "By sectioning at 113K..."). Although the proposed improvements reduce the number and the severity of artefacts, they are not eliminated.

### Aim of the invention

The invention aims to provide an improved method in which lamellae can be formed from a core sample without introducing artefacts caused to mechanical deformation.

### Summary of the invention

To that end the method according to the invention is characterised in that the slicing is performed by exposing the core sample to focused ion beam milling.

The invention is based on the insight that a focused ion beam can remove material without exerting forces to the core sample, aside from the (negligible) momentum transfer of the ions. Therefore artefacts due to mechanical deformation are avoided.
The ion beam can be focused to a very thin beam, with a focal diameter of several nanometres and an opening angle of several milliradians. Typical values are e.g. 7 nm and 1.0 mrad. Cutting a lamella from a core sample with e.g. a diameter of 150 µm is thus achieved by removing a thin layer of several nanometres between the core sample and the lamella. Very little material is thus removed between lamellae and a contiguous series of lamellae can be formed without loosing information of missing structures in removed material.

It is remarked that the removal of material to free a sample using a focused ion beam is also known from e.g. US patent No. US 5,270,552 to Hitachi. This patent describes the extraction of a sample from a semiconductor wafer by milling a trench around the sample and undercutting it with a focused ion beam. The problem addressed in this method is to cut a minute sample from a work piece with a large, flat surface without damaging other parts of the work piece. This differs from the problem of the invention, that is: to slice a mechanically soft medium (the core sample; being a high-viscosity fluid) while avoiding mechanical deformation in the sliced part occurs and to be used with cryogenic samples.

In an embodiment of the method according to the invention the core sample is exposed to focused ion beam milling from different directions.

By exposing the core sample to focused ion beam milling from different directions a cleaner cut can be made that minimises re-deposition. Re-deposition is directed away from the cutting zone by the direction and angle of cutting at the sample. To assist the collection of such contaminants produced by the cutting process, the flow direction of re-deposition product may e.g. be directed to a cryo-shield structure, held at a lower temperature than the sample and in close proximity to the sample cutting area. The re-deposited molecules once impacting on the cryo-shield remain attached to (frozen to) the cold surface.

In a further embodiment of the method according to the invention exposing the core sample to focused ion beam milling from different directions comprises the steps of:
- milling the core sample with an ion beam in one orientation,
- re-orienting the core sample by rotating it to another orientation, and
- milling the core sample with the ion beam in the other orientation.

By e.g. rotating the core sample a number of times and by the approximate number of degrees necessary, cuts can be milled from two or more sides, resulting in minimal loss of material and thereby, when repeatedly performing the method according to the invention, enabling the formation of a contiguous series of lamellae with minimal tissue missing between subsequent lamella.

It is remarked that it may be necessary to stabilize the sample to prevent curling. This may be done by e.g. connecting the sample to a manipulator. A method to connect a sample to a manipulator is discussed later.

In another embodiment of the method according to the invention forming the core sample from sample material comprises cooling sample material to cryogenic temperatures, and the slicing is performed at cryogenic temperatures.

By cooling e.g. a hydrated biological sample or a liquid polymer the sample can be frozen to form a vitreous (non-liquid) sample which can be analysed or inspected in e.g. a charged particle instrument, such as a Scanning Electron Microscope (SEM), a Focused lon Beam (FIB) apparatus, a Dual Beam^{®} Instrument -employing both an ion beam and an electron beam-, a Transmission Electron Microscope (TEM) or a Scanning Transmission Electron Microscope (STEM).

It is remarked that cryogenic lamella inspection is often preferred in a TEM as at these temperatures the damage to the lamella caused by the irradiation with electrons having an energy of e.g. between 80-300 keV is less severe than the damage occurring at elevated temperatures.
Another advantage of using cryogenic lamella is that e.g. water will not evaporate or sublimate from the solid state as long as the temperature is held below the critical freeze drying point. As a result the structure of the tissues to be inspected is not affected by the vacuum of the TEM.
An associated advantage of using cryogenic lamella is that the pressure rise caused by the introduction of the cryo-sample in the vacuum of a TEM is minimized.

It is further remarked that the impinging ion beam transfers an amount of energy to the core sample, thereby increasing the temperature of the core sample and the lamella. Experiments show that for a cylindrical core sample of biological material with a diameter of 150 µm, and using an ion beam with ions with an energy of 30 keV typically a charge of 5000 nC is needed to free a lamella from the core sample. This amounts to an energy of only 0.15 J per lamella. This energy, divided over core sample and lamella, proves to be sufficiently low that, when operating at a sufficiently low temperature of e.g. 120K no phase change of the lamella or the core sample occurs.

In a further embodiment of the method according to the invention the cooling of the sample is performed under conditions resulting in a vitreous core sample.

When freezing e.g. biological samples ice needles may form, resulting in artefacts. By cooling the sample at high speed, e.g. more than 10⁴ K/s, to a temperature below approximately 137K (the glass-transition temperature) the formation of ice is avoided and a vitreous sample is formed.
It is remarked that, although an exact value for the glass transition temperature is given, there is still scientific debate to its exact value. In this context the glass transition temperature mentioned is the temperature below which the core sample keeps its amorphous or vitreous phase.

In a yet further embodiment of the method according to the invention the sample comprises water and the method further comprises forming the core sample by high-pressure freezing of the sample material, resulting in a vitreous core sample.

High pressure freezing is a known method to form vitrified samples of larger size than possible when forming a vitrified sample at atmospheric pressure, e.g. by plunging a sample in liquid ethane or liquid nitrogen. High pressure freezing is described in e.g. US patent No. US 5,493,865.

In another embodiment of the method according to the invention the method further comprises covering the core sample with a protective layer before a lamella is sliced from the core sample.

The protective layer makes it possible to perform the method even when some of the ions produced are not confined to the area where milling is intended. The protective layer is easily removed by the focussed part of the ion beam, but protects the core sample sufficiently from damage or milling that may otherwise occur due to the stay ions.
It is remarked that in a typical ion milling station a small but non-negligible part of the ions are imaged at a position different from the focal point, and that these ions could otherwise cause damage to the unprotected core sample.

In a further embodiment of the method according to the invention the core sample is covered by a protective layer by directing a jet of gas to the core sample while rotating the core sample with respect to the jet of gas.

By rotating the core sample while directing a jet of gas to it, a protective layer is formed all around the core sample.

In yet another embodiment of the method according to the invention the method further comprises depositing the lamella on a TEM grid.

By depositing the lamella or lamellae on a TEM grid, inspection of said lamellae in TEM is possible. The TEM grid may be a conventional TEM grid, but the lamellae may also be placed on other types of TEM grids, e.g. the TEM grid described in European Patent Application EP2007108896 or the TEM grid described in US patent No. US 7,034,316, said TEM grids suited for automated handling.

In a further embodiment of the method according to the invention depositing the lamella on a TEM grid comprises the steps of:
- prior to separating the lamella from the core sample attaching a part of the core sample to be formed into the lamella to a manipulator,
- after separating the lamella from the core sample positioning the lamella to a position in the vicinity of the TEM grid, and
- separating at least part of the lamella from the manipulator.

By attaching the lamella to a manipulator the lamella can be transported from the core sample to the TEM grid. The lamella may then be placed on the TEM grid and can then be severed from the manipulator.

In yet a further embodiment of the method according to the invention the method further comprising attaching the lamella to the TEM grid prior to separating at least part of the lamella from the manipulator.

By attaching the lamella to the TEM grid the lamella is mechanically secured, as a result of which the risk of loosing the lamella during transport of the TEM grid to e.g. a TEM is minimised.

In still a further embodiment of the method according to the invention attaching a part of the core sample to a manipulator comprises the steps of:
- contacting the core sample with the manipulator,
- heating the core sample at the location where the manipulator contacts the core sample,
- freezing the core sample to the manipulator;
   and separating at least part of the lamella comprises
- heating the bond between manipulator and lamella.

The melting or sublimation/evaporation of material of a lamella followed by freezing of the lamella to a manipulator is described in European Patent Application EP07111419.3.

It is remarked that it may seem impossible to perform the method according to the invention in vacuum using water, as the phase diagram of water shows that at a pressure below approximately 6 mbar (the pressure associated with the triple point of water) solid ice changes directly to vapour, a process known as sublimation. This would suggest that no ice bond can be formed by freezing of water. However, experiments show the feasibility of the method in vacuum. Three mechanisms may explain this paradox:
- a very localized pressure or pressure burst in excess of 6 mbar may occur when a heated part of the manipulator touches the core sample, said pressure sufficiently high for the ice to melt instead of to sublimate,
- local evaporation may results in re-deposition of the gas thus formed in the gap between the core sample and the manipulator, as a result of which an ice bound is formed, or
- the attaching of the core sample is caused by a phase change from e.g. amorphous to crystalline ice, the latter phase bonding the core sample and the manipulator.

In a yet further embodiment of the method according to the invention the lamella is attached to the TEM grid by freezing the lamella to the TEM grid

By freezing the lamella to the TEM grid the lamella is attached to the grid and thereby secured from falling from the grid when the grid is transported to a TEM.

In another embodiment of the method according to the invention the lamella is deposited on a TEM grid by electrostatic forces.

The core sample and the lamella may be charged when the ion beam mills into the core sample. Dependant on the composition of the core sample and the angle on which the ion beam irradiates the core sample, the core sample and the lamella may both be positively or negatively charged. Hereby the lamella frees itself from the core sample when the connection between core sample and lamella is severed by the ion beam. By charging the TEM grid with an electric charge of opposite sign, the lamella is attracted to the grid.

In yet another embodiment of the method according to the invention a series of lamellae is deposited on the grid.

Often a contiguous series of lamella is required, said series comprising a series of cross-sections of a structure to be studied. In this way a complete structure such as a microbe can be studied, instead of only one cross-section of the structure. 3D reconstruction techniques may be used to form a complete image of said structure.

In an aspect of the invention an apparatus for forming samples from a core sample, the apparatus comprising:
- a column equipped to produce a focused ion beam onto a sample position,
- a stage equipped to be connected to the sample to position and rotate the sample on the sample position,
- a manipulator showing an extremity to which extremity a lamella may be attached, and
- a gas injection system,
- at least the part of the stage equipped to be connected to the sample is equipped to be cooled to a cryogenic temperature,
- the sample position is at least partly surrounded by a cryo-shield, said cryo-shield equipped to be held at a cryogenic temperature, and
- the extremity of the manipulator is equipped to be held at a cryogenic temperature,
**is characterised in that**
- the extremity of the manipulator is further equipped to be heated to a temperature above the melting or sublimation temperature of water while another part of the manipulator is held at a cryogenic temperature.

An apparatus according to the pre-amble is known and available from FEI Company. A cryo-FIB is also described in "Cryo-FIB for thinning Cryo-TEM samples and evading ice during cryo-transfer", W.J. MoberlyChan et al, Microsc. Microanal 11 (Suppl 2) 2005, page 854. A cryogenic sample can be introduced in the apparatus on the stage so that the sample is positioned at the sample position. As the stage is held at a cryogenic temperature and the sample position is surrounded with a cryo-shield, the sample is kept at the cryogenic temperature: the warming of the sample and the lamella caused by e.g. the ion beam or due to exposure to an environment at a higher temperature, is thereby counteracted.

The system is used to either observe the surface of a sample with a Scanning Electron Microscope (SEM column), or to thin a sample already placed on a TEM grid to a thickness appropriate for TEM inspection (see the text accompanying the figures, showing that the sample is placed on a grid prior to thinning).

By equipping the manipulator with an extremity that can be heated to a temperature above the melting or sublimation temperature of water, after which the extremity is cooled to a temperature below the freezing point of water, the lamella can be attached to the manipulator by freezing the (locally heated) lamella to the manipulator and thereby the before mentioned method can be performed.
The melting or sublimation/evaporation of material of a lamella followed by freezing of the lamella to a manipulator is described in European Patent Application EP07111419.3.
In another embodiment of the apparatus according to the invention the apparatus is equipped with a programmable control unit controlling the apparatus in such a way that the apparatus is equipped to automatically:
- position the core sample to a cutting position,
- cover the core sample with a protective coating by directing a jet of a fluid to the core sample,
- slice the core sample, thereby forming a lamella (5) from the core sample,
- connect the extremity (7) of the manipulator (25) to the lamella to transport it to a TEM grid (6), and
- release the lamella on to the TEM grid.

### Brief description of the drawings

Embodiments of the present invention will be described hereinafter with reference to figures, whereby identical reference numerals indicate corresponding elements. To this end:
figure 1 schematically shows a lamella being freed from a core sample by ion beam milling;
figure 2 schematically shows a lamella attached to a manipulator being freed from a core sample;
figure 3 schematically shows the relative ion beam intensity as a function of the distance to the focal position;
figure 4 schematically shows a core sample being covered with a protective layer; and
figure 5 schematically shows an apparatus equipped to perform the method according to the invention.

### Detailed description of the drawings

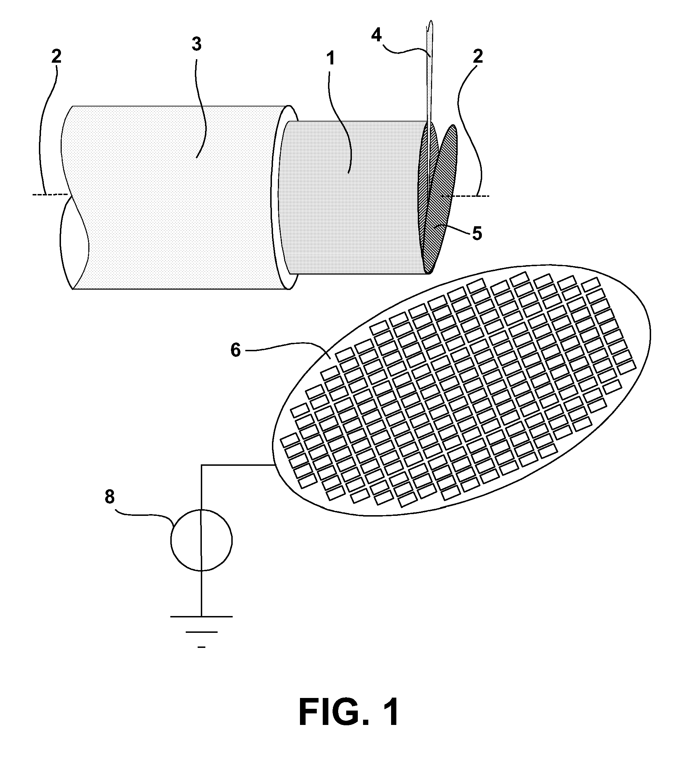

Figure 1 schematically shows a lamella being freed from a core sample by ion beam milling.

A core sample 1 is formed in a copper tube 3 by high-pressure freezing, a method known per se. The inner diameter of the copper tube is typically between 100 and 250 µm, but tubes with different inner diameters may be used, resulting in core samples with different outer diameters. Although the term copper tube implies that a cylindrical core sample is formed, the tube need not have a circular inner cross-section and tubes with other cross-sections may be used, resulting in core samples with non-circular outer cross-sections.
After forming the core sample by said freezing technique the core sample in the tube is placed in an evacuated environment. Due to the lowering of the pressure, and also due to the lowering of the temperature during the freezing, a part of the core sample often extends along axis 2 from the copper tube. It is also possible to squeeze a part of the core sample out of the tube.
A focused ion beam 4 is focused on the core sample and thereby removes material between the core sample 1 and the lamella 5. The ion beam preferably has an orientation substantially perpendicular to axis 2 along which the core sample extends, thereby slicing a lamella representing a perpendicular cross-section of the core sample. However also slicing lamella under other angles yields lamella usable for TEM inspection.

By the removal of the material the lamella 5 is freed from the core sample. Both core sample and lamella are charged with charges of the same sign due to the irradiation with the ion beam, as a result of which the lamella and the core sample repel each other. By charging TEM grid 6 with a charge with opposite sign the lamella is attracted by the grid and as soon as the lamella is completely freed from the core sample, the lamella will attach itself to the grid. Said charging of the grid may be done by e.g. connecting the grid to a voltage source 8.

It is remarked that, prior to freeing a lamella fit for inspection in a TEM, it might be attractive to form a flat face on the core sample by milling a part from the core sample.

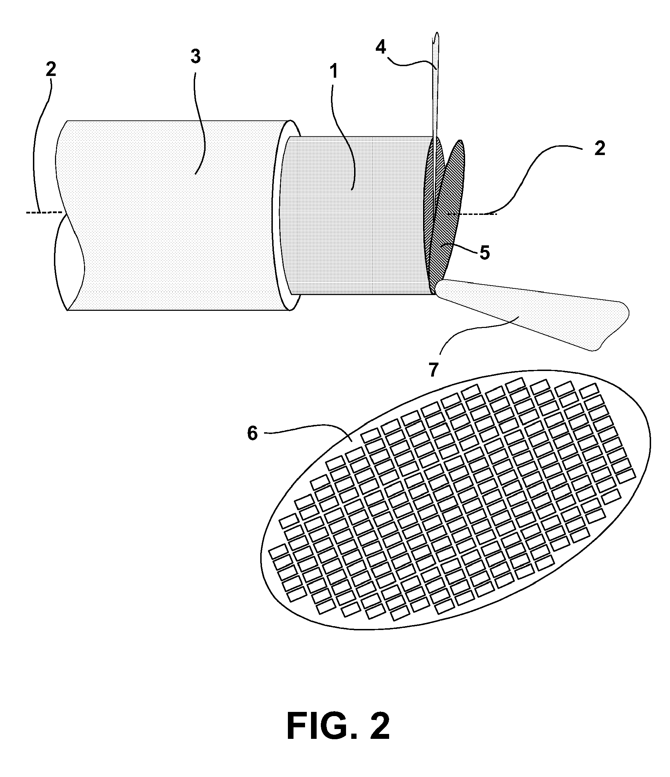

Figure 2 schematically shows a lamella attached to a manipulator being freed from a core sample.
Figure 2 can be thought to be derived from figure 1. Here however lamella 5 is attached to an extremity 7 of the manipulator. Attaching a lamella to the manipulator by melting or sublimation/evaporation of material of a lamella followed by freezing of the lamella to the manipulator is described in European Patent Application EP07111419.3.

It is remarked that the traditional method of attaching a lamella to a manipulator by Ion Beam Induced Deposition (IBID), which is widely used at room temperature, is less suited for use with cryogenic lamellae, as the gasses used behave differently at cryogenic temperatures, resulting in e.g. condensation all over core sample, lamella and manipulator. Also the chemistry of IBID differs at cryogenic temperatures, as a result of which the normally volatile gasses formed during IBID will not evaporate.

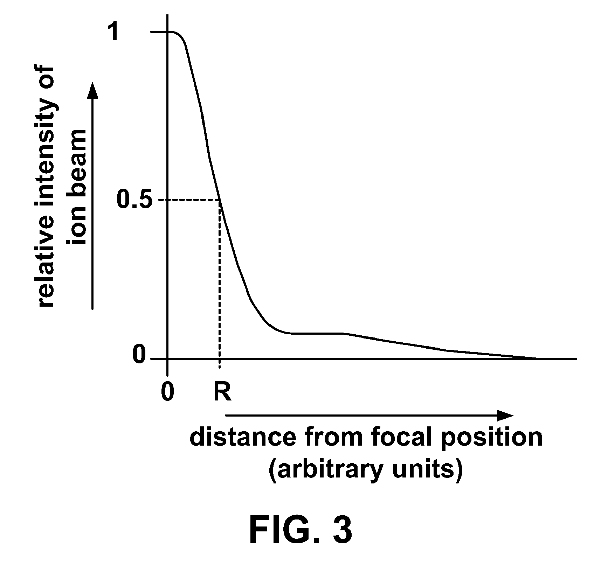

Figure 3 schematically shows the relative ion beam intensity as a function of the distance to the focal position.

An ion beam focused into a spot is often defined in terms of having a diameter R. The diameter R may reflect the diameter in which the current density drops to less than 50%, although also other values may be used. Often the ion beam shows a non-Gaussian intensity distribution. This implies that a certain amount of ions is imaged at a distance far removed from the focal point. These ions may damage the core sample or cause milling/erosion at parts that are not intended to be irradiated with the ions. To avoid said damage or milling/erosion the core sample may be covered with a protective layer. The part of the beam where the intensity is high is then used to mill through both the protective layer and through the core sample, while the protective layer is sufficiently thick to protect the core sample from low-intensity parts of the beam.

It is remarked that, as known to the person skilled in the art, the milling speed not only varies with the intensity of the ion beam, but also with the angle under which the ion beam hits the surface. When milling a deep trench, self-focusing occurs. This is among others the result of re-deposition and of the angular efficiency of the milling itself.

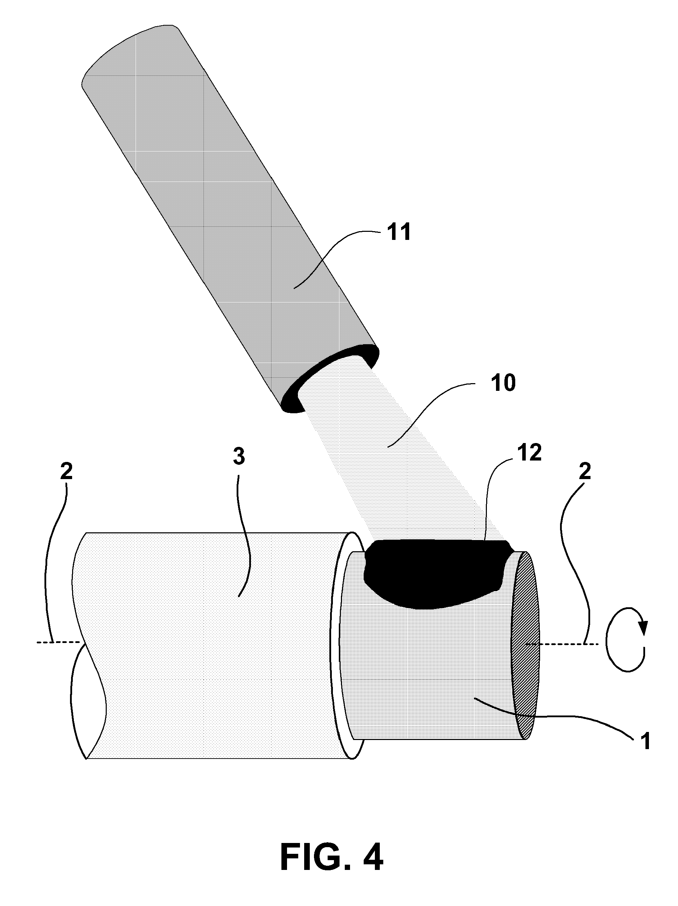

Figure 4 schematically shows a core sample being covered with a protective layer.

A gas nozzle 11 directs a jet of a fluid 10 towards the core sample 1. The fluid condenses on the core sample in a protective layer 12. Said protective layer may be a liquid layer, or it may be frozen to a solid. By rotating the copper tube 3 and the core sample 1 round axis 2, the core sample can be covered on all sides. By applying the correct dosage of fluid a protective layer is formed with a thickness sufficient to protect the core sample from low-intensity parts of the ion beam, while it is sufficiently thin to be easily milled by the high-intensity part of the beam.

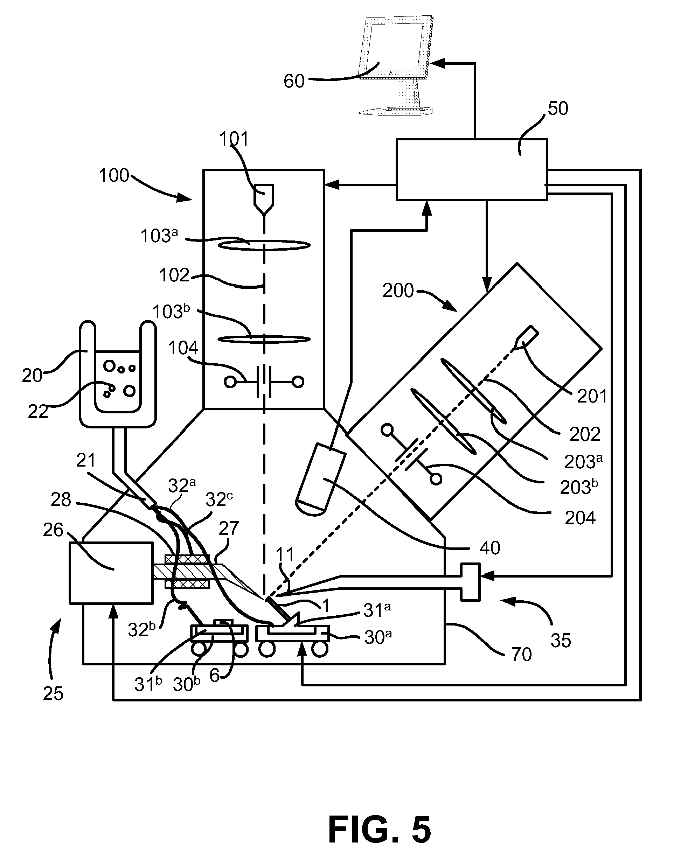

Figure 5 schematically shows an apparatus equipped to perform the method according to the invention.

A vacuum chamber 70 is connected to a SEM (Scanning Electron Microscope) column 100 and a FIB (Focused lon Beam) column 200.
The SEM column 100 comprises an electron source 101 producing a beam of electrons 102. The electron beam is focused by particle optical lenses 103^{a} and 103^{b}, which may be electrostatic lenses or magnetic lenses. The electron beam is deflected by deflector 104.

The FIB column 200 comprises an ion source 201 producing a beam of ions 202. The ion beam is focused by particle optical lenses 203^{a} and 203^{b}, which are preferably electrostatic lenses, but may also be magnetic lenses. The ion beam is deflected by deflector 204.

On the vacuum chamber a dewar 20 is mounted which shows a cold finger 21 inside the vacuum. By filling the dewar with e.g. liquid nitrogen 22 the temperature of the cold finger will be close to the boiling point of liquid nitrogen. That temperature is low enough to keep a vitrified sample stable. Flexible copper braids 32^{a} 32^{b} and 32^{c} form a connection with high thermal conductivity towards the cold finger and thereby bring parts connected to it to a cryogenic temperature.

In the vicinity where both beams intersect a core sample 1 is placed on a stage 30. This position, the sample position, is surrounded by cryo-shields (not shown) to keep the temperature of the core sample 1 low. These cryo-shields are also connected to cold finger 21 to keep their temperature low.

Stage 30^{a} enables positioning the core sample with respect to the intersecting beams, and may be a relatively simple X-Y table, but may also offer more degrees of freedom to orient the core sample. Stage 30^{a} comprises a platen 31^{a} that is connected with the cold finger 21 via flexible braid of copper wire 32^{a}. Thereby platen 31^{a} is kept at a cryogenic temperature.

Grid transporting stage 30^{b} enables positioning the grid with respect to the manipulator and intersecting beams, and may be a relatively simple X-Y table, but may also offer more degrees of freedom to orient the grid. Grid transporting stage 30^{b} comprises a platen 31^{b} that is connected with the cold finger 21 via flexible braid of copper wire 32^{b}. Thereby platen 31 is kept at a cryogenic temperature.

Manipulator 25 is equipped with a movable stage 26 on which a rod 27 is mounted. Jacket 28 surrounds said rod 27. The extremity of the rod can be positioned to be in contact with the core sample 1. Jacket 28 is connected to the cold finger 21 via a flexible braid of copper wire 32^{c}. Thereby the jacket is kept at a cryogenic temperature, and thereby the rod 27.

To form a protective layer on a cryogenic sample a Gas Injection System (GIS) 35 is mounted on the vacuum chamber, said GIS capable of delivering a jet of gas via nozzle 11.

Radiation in the form of e.g. secondary electrons emerging from the sample as a result of the irradiating beam or beams (102, 202) is detected by a detector 40. The signal of this detector is acquired by controller 50, said controller also controlling the columns, the scanning of the beams over the sample, the position of the stages 30^{a} and 30^{b}, the position of manipulator 10 and the working of a GIS 35. Herewith an image of the sample can be displayed on monitor 60.

The vacuum chamber 70 and the interior of the columns 100 and 200 are kept evacuated. This is necessary to let the beams 102 and 202 travel from their sources 101 and 201 to the core sample and to guide e.g. secondary electrons from the core sample to the detector 40. It also eliminates unwanted condensation of gas onto the core sample, which might lead to e.g. the formation of hoarfrost.

Instruments comprising a FIB column and a SEM column are commercially available, e.g. the NanoLab 600 of FEI Company, Hillsboro, Oregon, USA. As known to the person skilled in the art a work piece such as a wafer or such as biological material can be milled with the ion beam so that a sample is freed from the work piece. With the manipulator according to the invention the sample can be attached to the manipulator 10 by local heating of the sample and/or local heating of the manipulator, e.g. by irradiating these parts with the electron beam 102. To that end the current in the beam may be larger than the current normally used for optimum resolution of an image acquired with optimum resolution. Optimum resolution at an electron beam energy of e.g. 30 keV is often achieved at a current of e.g. 1-10 pA, while a current in excess of 100 nA may be used for heating. Reducing the current results in cooling of that part via rod 2, which is kept at a cryogenic temperature, and thus the sample 1 will freeze to the manipulator 10. Thereafter the sample can be processed further. This processing may include thinning of the sample to its final thickness and/or attaching it to a conventional TEM grid 6, placed on the grid transporting stage 30^{b}. For easy access the TEM grid may e.g. be positioned on the grid transporting stage 30^{b}, so that the sample can be positioned on the TEM grid by positioning grid transporting stage 30^{b} accordingly and then detaching the sample from the manipulator by re-heating the sample. Afterwards the TEM grid may be transferred to a TEM for final inspection.

It is remarked that it is possible to extend the apparatus according to the invention with a Transmitted Electron Detector (TED), in which the electrons produced by the SEM column 100 and transmitted through the core sample 1 are detected. This enables preparation and inspection of a core sample in one apparatus. It can also be envisaged to observe the core sample at another location in the same apparatus, enabling the inspection of one core sample while freeing another one from a work piece.

It is also remarked that, although an embodiment with a stage 30^{a} and a grid transportation stage 30^{b} is shown, including a manipulator 25, the person skilled in the art will recognize that a system with less positioning tools is possible, e.g. by placing the grid on stage 30^{a}, leaving stage 30^{b} superfluous, or by equipping the manipulator 25 with a stationary tip, and coordinate the movement of the two stages and the manipulator such that the lamella is transported from one stage to the other.

## Claims

1. Method for separating a lamella for TEM inspection from sample material comprising structures to be analysed or inspected, the method comprising:
• providing the sample material,
• forming a non-liquid, elongated core sample (1) from the sample material, said core sample extending along a longitudinal direction, and
• slicing a lamella (5) from the core sample, said lamella representing a cross-section of the core sample,
**characterized in that**
• the slicing is performed by exposing the core sample to focused ion beam milling.

2. The method according to claim 1 in which the core sample is exposed to focused ion beam milling from different directions.

3. The method according to claim 2 in which focused ion beam milling the core sample from different directions comprises the steps of:
• milling the core sample with an ion beam in one orientation,
• re-orienting the core sample by rotating it to another orientation, and
• milling the core sample with the ion beam in the other orientation.

4. The method according to any of the preceding claims in which forming the core sample (1) from sample material comprises cooling sample material to cryogenic temperatures and the slicing is performed at cryogenic temperatures.

5. The method according to claim 4 in which the cooling of the sample material is performed under conditions resulting in a vitreous core sample.

6. The method according to claim 5 in which the sample material comprises water and the method further comprises forming the core sample by high-pressure freezing of the sample material, resulting in a vitreous core sample.

7. The method according to any of the preceding claims in which the method further comprises covering the core sample (1) with a protective layer (12) before a lamella (5) is sliced from the core sample.

8. The method according to claim 7 in which the core sample (1) is covered by a protective layer (12) by directing a jet of gas (10) to the core sample while rotating the core sample with respect to the jet of gas.

9. The method according to any of the preceding claims in which the method further comprises depositing the lamella on a TEM grid (6).

10. The method according to claim 9 in which depositing the lamella on a TEM grid comprises the steps of:
• prior to separating the lamella (5) from the core sample (1) attaching a part of the core sample to be formed into the lamella to a manipulator (7),
• after separating the lamella from the core sample positioning the lamella to a position in the vicinity of the TEM grid (6), and
• separating at least part of the lamella from the manipulator.

11. The method according to claim 10, the method further comprising attaching the lamella (5) to the TEM grid (6) prior to separating at least part of the lamella from the manipulator (7).

12. The method according to claim 10 or claim 11 in which attaching a part of the core sample to a manipulator comprises the steps of:
• contacting the core sample (1) with the manipulator (7),
• melting or sublimating the core sample at the location where the manipulator contacts the core sample,
• freezing the core sample to the manipulator,
and separating at least part of the lamella comprises
• melting or sublimating the bond between manipulator and lamella (5).

13. The method according to any of claims 10-12 in which the lamella (5) is attached to the TEM grid (6) by freezing the lamella to the TEM grid.

14. The method according to claim 9 in which the lamella (5) is deposited on the TEM grid (6) by electrostatic forces.

15. The method according to any of claims 9-14 in which a series of lamellae (5) is deposited on the TEM grid (6).

16. Apparatus for forming samples from a core sample, the apparatus comprising:
• a column (200) equipped to produce a focused ion beam onto a sample position,
• a stage (30) equipped to be connected to the sample (1) to position and rotate the sample on the sample position,
• a manipulator (25) showing an extremity (7) to which extremity a lamella (5) may be attached, and
• a gas injection system (35),
• at least the part of the stage (30) equipped to be connected to the sample is equipped to be cooled to a cryogenic temperature,
• the sample position is at least partly surrounded by a cryo-shield, said cryo-shield equipped to be held at a cryogenic temperature, and
• the extremity (7) of the manipulator is equipped to be held at a cryogenic temperature,
**characterised in that**
• the extremity (7) of the manipulator is further equipped to be heated to a temperature above the melting or sublimation temperature of water while another part of the manipulator is held at a cryogenic temperature.

17. The apparatus according to claim 16 equipped with a programmable control unit (50) controlling the apparatus in such a way that the apparatus is equipped to automatically:
• position the core sample to a cutting position,
• cover the core sample with a protective coating by directing a jet of a fluid to the core sample,
• slice the core sample, thereby forming a lamella (5) from the core sample,
• connect the extremity (7) of the manipulator (25) to the lamella to transport it to a TEM grid (6), and
• release the lamella on to the TEM grid.

18. Software carrier for programming the programmable control unit comprised in the apparatus according to claim 17.
